# FASCICULE DE BREVET EUROPEEN

(11) **EP 1 789 309 B1**
(45) Date de publication et mention de la délivrance du brevet: **25.02.2009**
(21) Numéro de dépôt: 04787335.1
(22) Date de dépôt: 09.09.2004
(51) Int. Cl.: B62J 17/08

(54) **DISPOSITIF POUR LA PROTECTION CONTRE LES INTEMPERIES DE L'UTILISATEUR D'UN CYCLE OU ANALOGUE**
VORRICHTUNG ZUM SCHUTZ VON BENUTZERN VON FAHRRÄDERN O. Ä. GEGEN DAS WETTER
DEVICE FOR WEATHER PROTECTION OF BICYCLE OR THE LIKE USERS

(43) Date de publication de la demande: 30.05.2007
(73) Titulaire: Daurel, Sandrine, 78000 Versailles (FR)
(72) Inventeur: Daurel, Sandrine, 78000 Versailles (FR)
(74) Mandataire: de Saint-Palais, Arnaud Marie
(86) Numéro de dépôt international: PCT/FR2004/002286
(87) Numéro de publication internationale: WO 2006/030072

(56) Documents cités:
- DE-A1- 19 944 794
- DE-U1- 29 904 644
- FR-A- 876 786
- FR-A- 2 649 064
- FR-A- 2 820 392
- FR-A- 2 851 984

## Description

La présente invention concerne un dispositif pour la protection contre les intempéries de l'utilisateur d'un cycle tel que, par exemple, une bicyclette ou un véhicule à deux ou trois roues actionné par des pédales. Le document de l'art antérieur FR-A-2649064 montre un dispositif correspondant au préambule de la revendication 1.

D'une manière générale, on sait que les intempéries, par exemple la pluie ou la neige, constituent un des obstacles majeurs qui s'oppose à la généralisation de l'usage de la bicyclette.

Pour tenter de résoudre ce problème, on a imaginé des solutions consistant à prévoir un carrossage amovible pouvant se monter ou se démonter sur la bicyclette. Néanmoins, cette solution demeure peu pratique. Elle accroît l'encombrement et le poids de la bicyclette et impose de fréquents montages et démontages.

En outre, ces carrossages ne protègent pas correctement la partie frontale du cycliste : les solutions consistant à équiper le guidon d'un pare-brise ne sont pas efficaces et constituent une gène pour la conduite de la bicyclette.

L'invention a donc plus particulièrement pour but de supprimer ces inconvénients.

Elle propose, à cet effet, un dispositif de protection comprenant une capote, apte à venir se fixer de façon facilement déconnectable sur le cadre du cycle, cette capote comportant deux éléments latéraux s'étendant de part et d'autre du plan médian de symétrie du cadre du cycle et un toit qui s'étend au moins au droit de la partie supérieure du dos et au-dessus de la tête du cycliste lorsque celui-ci est assis sur la selle. Selon l'invention, la susdite capote (1) comprend une structure réalisée au moyen de deux arceaux tubulaires (17, 18) qui s'étendent parallèlement l'un par rapport à l'autre et qui sont reliés l'un à l'autre par des traverses amovibles (19, 20, 21), l'extrémité inférieure desdits arceaux (17, 18) comprenant des moyens de fixation rapide sur le cadre de la bicyclette (3) et en ce qu'il comprend une visière escamotable (10) réalisée en une matière transparente montée coulissante sur l'extrémité supérieure des susdits arceaux (17, 18), de manière à pouvoir prendre au moins deux positions successives, à savoir ;
- une position déployée dans laquelle elle s'étend dans le prolongement de la capote (1), ou de sa bordure antérieure de manière à venir en avant de la tête du cycliste, et
- une position escamotée.

Avantageusement, la visière pourra être conçue de manière à pouvoir prendre en outre une position basculée autour d'un axe d'articulation situé au niveau du bord antérieur du toit de la capote.

Des modes d'exécution seront décrits ci-après, à titre d'exemples non limitatifs, avec référence aux dessins annexés dans lesquels :
La figure 1 est une représentation schématique d'un dispositif ne relevant pas de la présente invention;
La figure 2 est une représentation schématique illustrant le dispositif de protection selon l'invention équipant une bicyclette ;
La figure 3 est une vue en perspective du dispositif de protection de la figure 2.

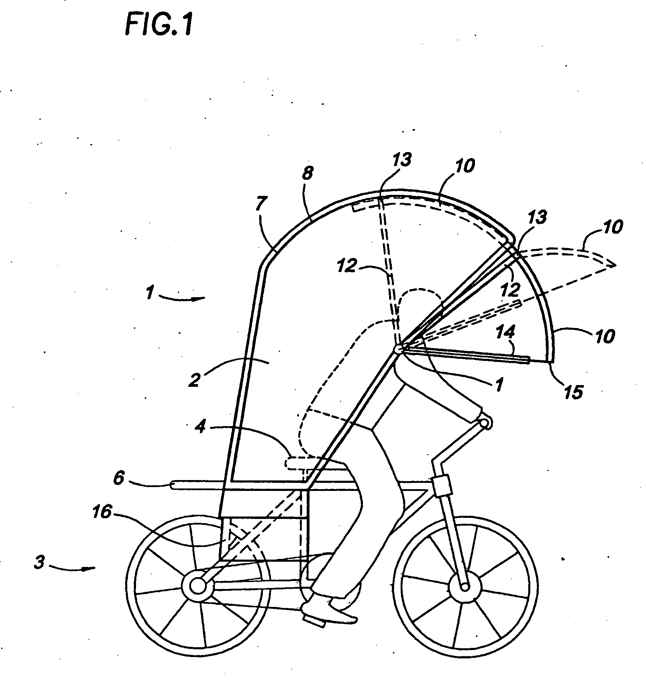

Dans l'exemple représenté sur la figure 1, qui ne relève pas de l'invention, le dispositif de protection comprend une capote 1 comportant deux flancs trapézoïdaux 2 (ou des montants latéraux) qui s'étendent parallèlement au plan de la bicyclette 3, de part et d'autre de la selle 4. La distance entre ces deux flancs 2 est légèrement supérieure à la largeur d'un cycliste.

Ces deux flancs 2 sont fixés au niveau de leur partie inférieure au cadre de la bicyclette 3, légèrement en arrière de la selle 4, par exemple, sur le porte bagage 6.

Le bord supérieur de chacun de ces flancs 2 présente une forme circulaire 7 supportant un toit bombé 8, également de forme circulaire.

Sur ces deux flancs 2 viennent s'articuler, autour de deux tourillons respectifs 11, les deux structures latérales d'une visière 10 réalisée en une matière transparente.

Ces deux structures latérales comprennent chacune deux biellettes, à savoir une biellette postérieure rigide 12 articulée par son extrémité inférieure autour de l'un desdits tourillons 11 et par son extrémité supérieure, sur la partie postérieure de la visière 10, autour d'un premier axe d'articulation 13 orienté parallèlement aux tourillons 11, et une biellette antérieure expansible 14 (formée d'au moins deux éléments dépliables ou assemblés télescopiquement) articulée par son extrémité inférieure autour dudit tourillon 11 et par son extrémité supérieure, sur la partie antérieure de la visière 10, autour d'un deuxième axe d'articulation 15 parallèle au premier.

Grâce à cette disposition, en pivotant autour des tourillons 11, la visière 10 peut prendre deux positions, à savoir : une position rétractée, (représentée en traits interrompus) dans laquelle la visière 10 se trouve logée dans la capote 1 et une position déployée dans laquelle elle s'étend au-delà de la capote 1 devant la tête du cycliste.

A partir de cette position déployée, la visière peut prendre une position basculée vers le haut, au terme d'un pivotement autour du deuxième axe d'articulation 13 avec déploiement simultané de la biellette expansible 14. Avantageusement, des moyens pourront être prévus pour verrouiller la biellette expansible 14 à l'état déployé et à l'état rétracté.

Eventuellement, la capote 1 pourra être conçue de manière à pouvoir se replier.

Dans ce cas, elle pourra comprendre une structure réalisée à l'aide d'arceaux, sensiblement en forme de U, dont les extrémités inférieures sont solidarisées au cadre de la bicyclette. Ces arceaux peuvent être éventuellement montés pivotants par leurs extrémités inférieures autour de deux axes coaxiaux solidarisés au cadre de la bicyclette 3 ou du porte bagage. Ils pourront supporter une toile ou un film souple imperméable (ou une plaque rigide) fixé sur le dessus et sur les cotés des arceaux.

On obtient ainsi une capote repliable (ou non) pouvant facilement se monter ou se démonter sur la bicyclette.

Dans l'exemple representé sur la figure 1, donné à titre d'information, les flancs de la capote sont disposés de manière à assurer la protection de deux sacoches latérales 16, suspendues au porte bagage de la bicyclette.

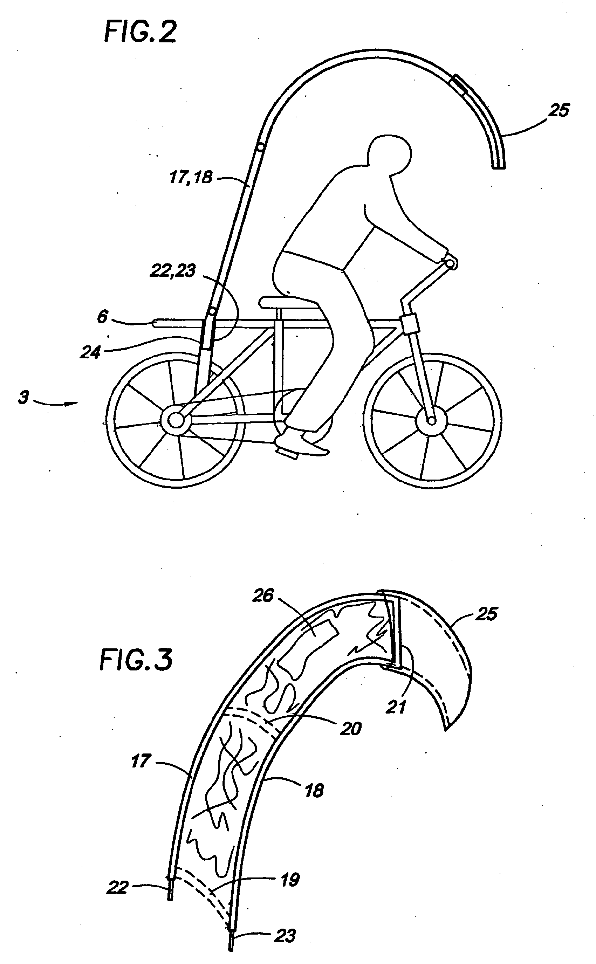

Le dispositif selon l'invention est représenté sur les figures 2 et 3.

Dans le dispositif selon l'invention, la structure de la capote est réalisée au moyen de deux arceaux tubulaires 17, 18 qui s'étendent parallèlement l'un par rapport à l'autre et qui sont reliés l'un à l'autre par des traverses amovibles, de manière à constituer une structure rigide de largeur légèrement supérieure à celle d'un cycliste.

L'extrémité inférieure de ces arceaux 17, 18 est prolongée par un tube droit 22, 23 destiné à s'engager télescopiquement dans un manchon tubulaire 24 solidaire du porte bagage 6 de la bicyclette.

Sur l'extrémité supérieure des arceaux est montée coulissante une visière transparente 25, pouvant prendre une position déployée, une position rétractée et éventuellement une position basculée vers le haut à partir de la position déployée.

Les deux arceaux supportent une toile ou un film imperméable 26.

L'avantage de cette solution consiste en ce que la capote est légère et facile à monter ou à démonter. A l'état démonté, elle peut être repliée pour ne présenter qu'un très faible encombrement.

## Revendications

1. Dispositif pour la protection de l'utilisateur d'un cycle ou analogue contre les intempéries, ce dispositif comportant une capote (1) apte à venir se fixer de façon facilement déconnectable sur le cadre du cycle (3), cette capote comportant deux éléments latéraux s'étendant de part et d'autre du plan de symétrie du cadre dudit cycle et un toit qui s'étend au-dessus de la tête du cycliste lorsque celui-ci est assis sur la selle (4),
**caractérisé en ce que** la susdite capote (1) comprend une structure réalisée au moyen de deux arceaux tubulaires (17, 18) qui s'étendent parallèlement l'un par rapport à l'autre et qui sont reliés l'un à l'autre par des traverses amovibles (19, 20, 21), l'extrémité inférieure desdits arceaux (17, 18) comprenant des moyens de fixation rapide sur le cadre du cycle (3) et **en ce qu'**il comprend une visière escamotable (10) réalisée en une matière transparente montée coulissante sur l'extrémité supérieure des susdits arceaux (17, 18), de manière à pouvoir prendre au moins deux positions successives, à savoir :
- une position déployée dans laquelle elle s'étend dans le prolongement de la capote (1), ou de sa bordure antérieure de manière à venir en avant de la tête du cycliste, et
- une position escamotée.

2. Dispositif selon la revendication 1,
**caractérisé en ce que** la susdite visière (10) est conçue de manière à pouvoir prendre en outre une position basculée vers le haut, à partir de la position déployée.

3. Dispositif selon la revendication 1,
**caractérisé en ce que** le susdit cycle consiste en une bicyclette (3).

4. Dispositif selon l'une des revendications précédentes,
**caractérisé en ce que** la susdite capote (1) est repliable.

5. Dispositif selon la revendications 3,
**caractérisé en ce que** l'extrémité inférieure des arceaux (17, 18) est prolongée par un tube droit (22, 23), destiné à s'engager téléscopiquement dans un manchon tubulaire (24) solidaire du porte-bagages (6) de la bicyclette (3).

## Claims

1. A device for protection of the user of a cycle or similar from bad weather, this device comprising a top (1) able to be fixed in an easily disconnectable manner on the frame of the cycle (3), this top comprising two side elements extending on both sides of the plane of symmetry of the frame of said cycle and a roof which extends above the head of the cyclist when the latter is seated on the seat (4),
**characterized in that** the abovementioned top (1) includes a structure realized using two tubular hoops (17, 18) which extend parallel to each other and which are connected to each other by removable cross pieces (19, 20, 21), the lower end of said hoops (17, 18) comprising quick fixing means on the frame of the cycle (3) and **in that** it comprises a retractable visor (10) realized transparently mounted sliding on the upper end of the abovementioned hoops (17, 18), so as to be able to assume at least two successive positions, namely:
- a deployed position in which it extends in the extension of the top (1), or from its front end so as to go in front of the head of the cyclist, and
- a retracted position.

2. The device according to claim 1,
**characterized in that** the aforementioned visor (10) is designed so as to also be able to assume a position in which it is tilted upward, from the deployed position.

3. The device according to claim 1,
**characterized in that** said cycle consists of a bicycle (3).

4. The device according to one of the preceding claims,
**characterized in that** the aforementioned top (1) can be folded.

5. The device according to claim 3,
**characterized in that** the lower end of the hoops (17, 18) is extended by a straight tube (22, 23), designed to engage telescopically in a tubular sleeve (24) integral with the luggage rack (6) of the bicycle (3).

## Patentansprüche

1. Vorrichtung für den Schlechtwetterschutz des Benutzers eines Fahrrads oder ähnlichem, wobei diese Vorrichtung mit einem Verdeck (1) versehen ist, das dafür geeignet ist, um leicht abnehmbar auf dem Fahrradgestell (3) befestigt zu werden, wobei dieses Verdeck zwei Seitenelemente umfasst, die sich auf beiden Seiten der Symmetrieebene des genannten Fahrradgestells erstrecken, und ein Dach, das sich über dem Kopf des Radfahrers hinweg erstreckt, wenn dieser auf dem Sattel (4) sitzt,
**gekennzeichnet dadurch, dass** das besagte Verdeck (1) eine Struktur umfasst, die mittels zwei rohrförmigen Bögen (17, 18) hergestellt wurde, die parallel zueinander verlaufen und die miteinander durch abnehmbare Querträger (19, 20, 21) verbunden sind, wobei das untere Ende der genannten Bögen (17, 18) mit Schnellkupplungselementen auf dem Fahrradgestell (3) ausgestattet sind und dass es einen einziehbaren Visierschirm (10) aus einem durchsichtigen Material umfasst, der gleitbar auf dem oberen Ende der genannten Bögen (17, 18) montiert ist, um mindestens zwei aufeinander folgende Positionen einnehmen zu können, und zwar:
- eine ausgespannte Position, in welcher er sich in der Verlängerung des Verdecks (1) oder seines vorderen Randes erstreckt, um vor dem Kopf des Radfahrers zu kommen, und
- eine eingezogene Position.

2. Vorrichtung nach Anspruch 1,
**gekennzeichnet dadurch, dass** das besagte Visier (10) so entworfen ist, um außerdem ab der ausgespannten Position eine nach oben geschwenkte Position einnehmen zu können.

3. Vorrichtung nach Anspruch 1,
**gekennzeichnet dadurch, dass** das besagte Fahrrad aus einem Zweirad (3) besteht.

4. Vorrichtung nach einem der vorangehenden Ansprüche,
**gekennzeichnet dadurch, dass** das besagte Verdeck (1) zusammenfaltbar ist.

5. Vorrichtung nach Anspruch 3, **gekennzeichnet dadurch, dass** das untere Ende der Bögen (11, 18) durch ein gerades Rohr (22, 23) verlängert ist, das dazu bestimmt ist, sich ausziehbar in einer rohrförmigen Muffe (24), die fest mit dem Gepäckträger (6) des Zweirads (3) verbunden ist, festzulegen.
